# EUROPEAN PATENT SPECIFICATION

(11) **EP 3 111 694 B1**
(45) Date of publication and mention of the grant of the patent: **05.09.2018**
(21) Application number: 14884137.2
(22) Date of filing: 25.07.2014
(51) Int. Cl.: H04W 24/10, H04W 72/02, H04W 88/02

(54) **USER STATION SUPPORTING DYNAMIC CHANNEL SELECTION AND METHOD FOR OPERATION ON DSRC BAND**
BENUTZERSTATION MIT UNTERSTÜTZUNG VON DYNAMISCHER KANALAUSWAHL UND VERFAHREN ZUM BETRIEB IN EINEM DSRC-FREQUENZBAND
STATION D'UTILISATEUR SUPPORTANT UNE SÉLECTION DE CANAL DYNAMIQUE ET PROCÉDÉ POUR FONCTIONNEMENT SUR BANDE DSRC

(30) Priority: 28.02.2014 US 201461946080 P
(43) Date of publication of application: 04.01.2017
(73) Proprietor: Intel IP Corporation, Santa Clara, CA 95054 (US)
(72) Inventor: AZIZI, Shahrnaz, Cupertino, California 95014 (US); PERAHIA, Eldad, Portland, Oregon 97229 (US); KENNEY, Thomas J., Portland, Oregon 97229 (US)
(74) Representative: HGF Limited
(86) International application number: PCT/US2014/048151
(87) International publication number: WO 2015/130337

(56) References cited:
- WO-A2-2014/028721
- US-A1- 2010 052 943
- US-A1- 2010 052 943
- US-A1- 2010 278 166
- US-A1- 2012 040 620
- US-A1- 2012 250 532
- US-A1- 2013 072 121

## Description

### PRIORITY APPLICATION

This application claims the benefit of priority to U.S. Provisional Patent Application number 61/946,080, filed February 28, 2014.

### TECHNICAL FIELD

Embodiments pertain to communication networks. Some embodiments pertain to coexistence techniques for devices that operate in accordance with one of the IEEE 802.11 standards, including the IEEE 802.11η and IEEE 802.1 lac standards. Some embodiments relate to high-efficiency wireless or high-efficiency WLAN (HEW) communications.

### BACKGROUND

Recently, the Federal Communications Commission (FCC) has proposed modifications of the existing rules governing Unlicensed-National Information Infrastructure (U-NII) to allow shared access for U-NII devices on some sub-bands of the 5 GHz frequency band. Wi-Fi devices operating according to a standard from an IEEE 802.11 wireless standards family may expand their operating bands to take advantage of these expansion bands. However, Wi-Fi devices may need to coexist with governmental or other types of incumbent devices that may have precedence in the expansion bands.

US 2013/0072121 A1 describes a radio beacon and a method for selective radio communication with a first onboard unit and a second onboard unit, in which a sequence of first data packet is transmitted to the first onboard unit in a first frequency band in accordance with 5.8 GHz DSRC standards, a sequence of second data packet is transmitted or received to/from the second onboard unit in accordance with 5.9 GHz DSRC standards, wherein the transmission of a data packet of the sequence of first data packet is delayed by the duration of the second data packet if the second data packet appears in the second frequency band.

### BRIEF DESCRIPTION OF THE DRAWINGS

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.
FIG. 1 illustrates a system in which example embodiments are implemented.
FIG. 2 illustrates Dedicated Short Range Communications Service (DSRC) channel assignment and corresponding IEEE 802.11n/ac channel assignments used in some available systems.
FIG. 3 illustrates a DSRC Measurement Report Element format in accordance with some embodiments.
FIG. 4 is a schematic of a machine according to some embodiments.
FIG. 5 is a schematic of a wireless node according to some embodiments.
FIG. 6 illustrates a procedure for coexistence in a DSRC channel in accordance with some embodiments.

### DETAILED DESCRIPTION

The following description and the drawings sufficiently illustrate specific embodiments to enable those skilled in the art to practice them. Other embodiments may incorporate structural, logical, electrical, process, and other changes. Portions and features of some embodiments may be included in, or substituted for, those of other embodiments. Embodiments set forth in the claims encompass all available equivalents of those claims. The invention is defined by the independent claims.

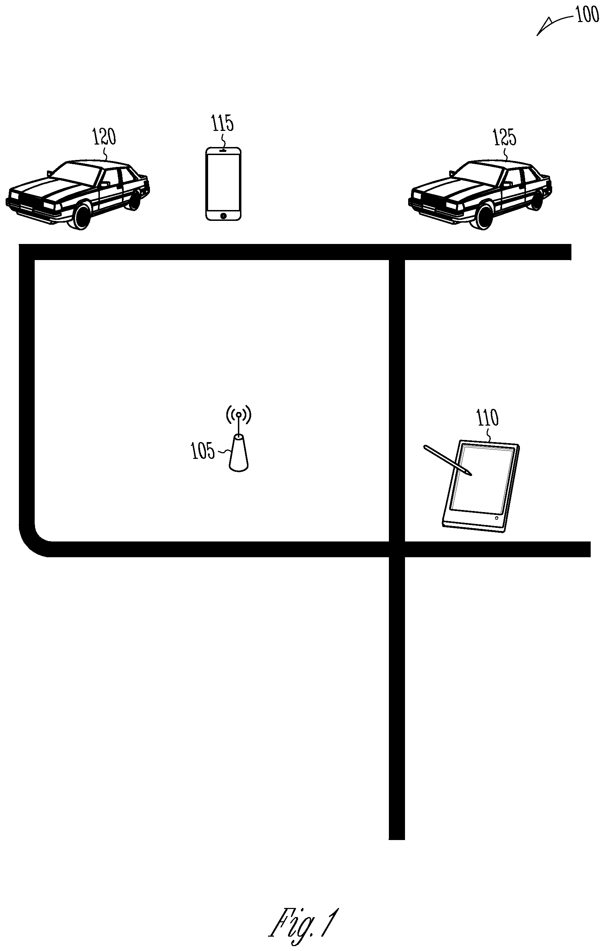

FIG. 1 illustrates a system 100 in which example embodiments can be implemented. System 100 includes an access point (AP) 105. While one AP 105 is illustrated, system 100 can included any number of APs. AP 105 can operate in accordance with a standard of the Institute of Electrical and Electronics Engineers (IEEE) 802.11 family of wireless standards including the IEEE 802.11n and the IEEE 802.11ac standards, although embodiments are not limited thereto.

System 100 includes user wireless communication stations (STAs) 110 and 115 that operate in accordance with a standard of the IEEE 802.11 family of wireless standards including the IEEE 802.11n and the IEEE 802.11ac standards, although embodiments are not limited thereto. The STAs 110 and 115 can be, for example, laptop computers, smart phones, tablet computers, printers, or any other wireless device with or without a user interface. While only a few STAs 110 and 115 are illustrated, system 100 can include any number of STAs. STAs 110 and 115, which may also be referred to as clients, belong to a basic service set (BSS) served by the AP 105.

Current IEEE 802.11n/ac devices such as STAs 110 and 115 can operate on certain sub-bands of the 5 GHz frequency band. Recently, the Federal Communications Commission (FCC) has proposed modification of the existing rules governing U-NII (Unlicensed-National Information Infrastructure) use of the 5 GHz frequency band by which 195 MHz of additional spectrum is allocated for U-NII shared access in the 5350-5470 MHz and 5850-5925 MHz sub-bands of the 5 GHz frequency band.

Several governmental agencies currently use the two aforementioned 5 GHz expansion bands. Non-governmental uses include fixed satellite uplinks (Earth-to-space) and mobile services. The non-governmental mobile service allocation is currently limited to systems such as Dedicated Short Range Communications Service (DSRC) systems 120 and 125 operating in the Intelligent Transportation System (ITS) radio service. The IEEE 802.11p amendment specifies enhancements to 802.11 to support ITS applications. The FCC may require that STAs 110 and 115 desiring to operate in these or other sub-bands of the 5 GHz frequency band implement situation-aware spectrum-sharing technologies to co-exist with IEEE 802.11p devices such as systems 120 and 125.

In some currently available systems that implement dynamic frequency selection (DFS), an AP 105 can scan for another system (e.g. radar) and cause the basic service set (BSS) devices, for example STA 110 and 115, to change channels if the other system is detected. For DFS with radar systems, the relative distance from the AP 105 and STAs 110 and 115 is essentially the same and in the order of tens of kilometers. However, when the other system is DSRC, the relative distance between the STAs 110 and 115 and DSRC systems 120 and 125 is in the order of tens or hundreds of meters. In such a scenario STAs 110 and 115 (e.g. in a coffee shop hotspot) may be much closer than the AP 105 to DSRC systems 120 and 125. The AP 105 may not hear DSRC systems 120 and 125, but the STAs 110 and 115 may cause interference to the DSRC systems 120 and 125.

As with other 5 GHz unlicensed bands, a STA 110, 115 should take appropriate actions to sense the media prior to use. In currently available systems that use the 5 GHz band, different devices may use the 5 GHz band for different uses. These varying uses may have different requirements before 5 GHz access is permitted. Some examples include the permitted transmit power level detection of radar signals, etc. STAs 110, 115 may additionally sense the media to use. Thus, if an IEEE 802.11p device is transmitting (and the transmissions are received above a certain power level), the IEEE 802.11n/ac device can sense the transmission, and then the IEEE 802.11n/ac device can either defer transmission or vacate the channel for the time duration that the IEEE 802.11p device is active.

Some embodiments provide methods for the IEEE 802.11n/ac device to vacate the channel for the time duration that the IEEE 802.11p device is active. Embodiments enable IEEE 802.11n/ac devices, for example STAs 110, 115 to monitor operation of DSRC devices and to vacate 5 GHz channels upon detecting DSRC device activities. While some embodiments are described as being implemented on IEEE 802.11 n/ac devices, it will be understood that embodiments can also be applied to further revisions and amendments of standards of the family of IEEE 802.11 family of standards or other standards.

For example, some embodiments can be implemented on devices that implement high-efficiency WLAN (HEW) standards. HEW can address high-density deployment scenarios. HEWs may provide increased throughput in public locations such as airports and shopping malls in which high-density wireless access points (APs) serve overlapping service areas and in which user devices communicate using peer-to-peer communication mechanisms.

In accordance with some HEW embodiments, AP 105 may operate as a master station which may be arranged to contend for a wireless medium (e.g., during a contention period) to receive exclusive control of the medium for an HEW control period (i.e., a transmission opportunity (TXOP)). The master station may transmit an HEW master-sync transmission at the beginning of the HEW control period. During the HEW control period, HEW stations may communicate with the master station in accordance with a non-contention based multiple access technique. This is unlike conventional Wi-Fi communications in which devices communicate in accordance with a contention-based communication technique, rather than a multiple access technique. During the HEW control period, the master station may communicate with HEW stations using one or more HEW frames. During the HEW control period, legacy stations refrain from communicating. In some embodiments, the master-sync transmission may be referred to as an HEW control and schedule transmission.

In some embodiments, the multiple-access technique used during the HEW control period may be an orthogonal frequency division multiple access (OFDMA) technique, although this is not a requirement. In some embodiments, the multiple access technique may be a time-division multiple access (TDMA) technique or a frequency division multiple access (FDMA) technique.

The master station may also communicate with legacy stations in accordance with legacy IEEE 802.11 communication techniques. In some embodiments, the master station may also be configurable communicate with HEW stations outside the HEW control period in accordance with legacy IEEE 802.11 communication techniques, although this is not a requirement.

In some embodiments, the links of an HEW frame may be configurable to have the same bandwidth and the bandwidth may be one of 20 MHz, 40 MHz, 80 MHz, or 160 MHz. In some embodiments, a 320 MHz bandwidth may be used. In some embodiments, bandwidths of 5 MHz and/or 10 MHz may also be used. In these embodiments, each link of an HEW frame may be configured for transmitting a number of spatial streams.

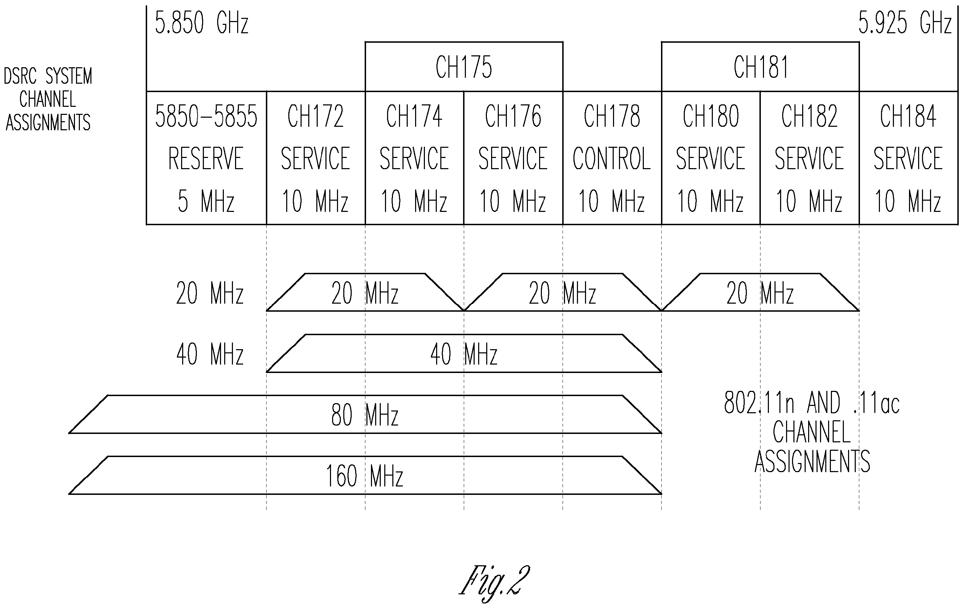

FIG. 2 illustrates Dedicated Short Range Communications Service (DSRC) channel assignment and corresponding IEEE 802.11n/ac channel assignments used in some available systems.

There are two possible bandwidths that an IEEE 802.11n device can use in the 5 GHz band, namely 20 and 40 MHz. An IEEE 802.11ac device can additionally use 80 MHz and 160 MHz, where the 160 can be contiguous or non-contiguous. Embodiments are described regarding 40 MHz operation. However, embodiments can be extended for the other bandwidths as well. As mentioned previously, the IEEE 802.11p devices can operate using 5, 10 and 20 MHz transmissions.

As seen in FIG. 2, there are several bandwidth signals, a 5 MHz reserved channel, seven 10 MHz channels and two 20 MHz channels. As will be noted, the IEEE 802.11n/ac system overlaps several of the IEEE 802.11p channels depending on bandwidth. For instance, a 40 MHz IEEE 802.11n/ac system using channels 172 to 178 of the DSRC system also overlaps channel 175, which is a 20 MHz DSRC system.

In some embodiments, an AP 105 can scan for DSRC operation and cause a BSS to change channels if a DSRC operation is detected. However, as described above, some STAs 110, 115 may be much closer to DSRC vehicles than the AP 105. The AP 105 may not hear the DSRC vehicles, but the STAs 110, 115 may cause interference to the DSRC vehicles. Accordingly, in some embodiments, the IEEE 802.11n/ac STAs 110, 115 may listen for DSRC vehicles and report the existence of DSRC vehicles to the AP 105. The IEEE 802.11n/ac STAs 110, 115 may therefore detect IEEE 802.11p transmissions at least to the extent that they can decode IEEE 802.11p Signal fields.

Clients such as STAs 110, 115 will report detected DSRC channels to the AP 105 by transmitting a DSRC Measurement Report element in a management frame. The DSRC Measurement Report element contains a list of channels on which a STA 110, 115 has found conditions that disallow use of those channels, except by devices operating with DSRC operations.

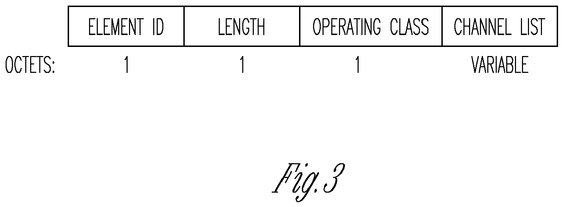

FIG. 3 illustrates a DSRC Measurement Report Element format in accordance with some embodiments. While a particular format is shown in FIG. 3, embodiments are not limited to the format of FIG. 3 and other formats can be used to report DSRC vehicle usage on the pertinent channels.

Referring to FIG. 3, the Element ID field can be set to the value of DSRC Measurement Report element that will be defined in accordance with a standard of the IEEE 802.11 family of standards for DSRC. In the illustrated example embodiment, the Length field of the DSRC Measurement Report element can be variable and dependent on the number of channels reported in the Channel List field. The minimum value of the Length field is 1 (based on a minimum length for the Channel List field of 0 octets). The Operating Class field of the DSRC Measurement Report element can contain an enumerated value from Annex E of a standard of the IEEE 802.11 standard or amendments thereto. The Operating Class field can be encoded as an unsigned integer, specifying the operating class in which the channel list is valid.

In embodiments, a DSRC Measurement Report report channels for a single operating class. Multiple DSRC Measurement Report elements are used to report channels in more than one operating class. The Channel List field of the DSRC Measurement Report element is a variable number of octets, where each octet describes a single channel number. Channel numbering shall be dependent on operating class according to Annex E or amendment to Annex E. A DSRC Measurement Report element includes only channels that are valid for the regulatory domain in which the STA 110, 115 transmitting the element is operating and only for channels that are consistent with the Country element transmitted by the AP 105 of the BSS of which the STA 110, 115 is a member.

In some embodiments, after the AP 105 receives the DSRC Measurement Report, the AP 105 can buffer traffic for the client STA 110, 115 until the client STA 110, 115 reports back to the AP 105 that the channel is clear. In another embodiment, the AP 105 can switch channels based on information of the client STA 110, 115 by transmitting a Channel Switch Announcement frames as defined in IEEE 802.11 specifications. Another approach is for the AP 105 to transmit to the client STA 110, 1115 on a sub-channel that avoids the DSRC. For example, if the AP 105 is an 80 MHz or 160 MHz device and the AP 105 transmits to the client STA 110, 115 on a 20 MHz or 40 MHz channel that does not overlap with DSRC). For example, if client STA 110, 115 operates in 40 MHz channel 172-178 as shown in FIG. 2, and the client STA 110, 115 reports back DSRC activities in channel 176, then the AP 105 can move operations to the 20 MHz channel that overlaps channels 172 and 174.

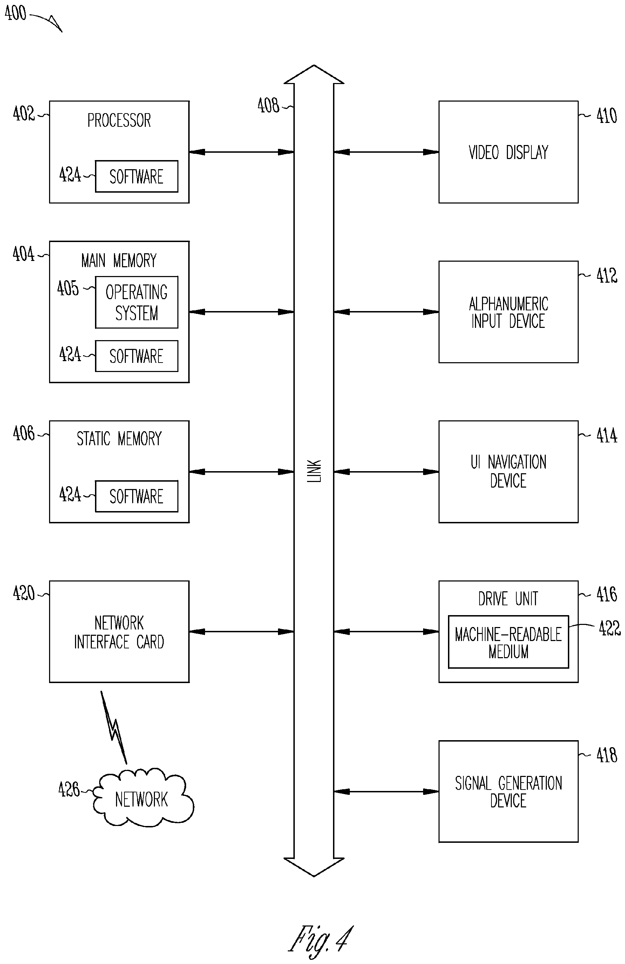

FIG. 4 illustrates a block diagram of an example machine 400 upon which any one or more of the techniques (e.g., methodologies) discussed herein may perform. In alternative embodiments, the machine 400 may operate as a standalone device or may be connected (e.g., networked) to other machines. In a networked deployment, the machine 400 may operate in the capacity of a server machine, a client machine, or both in server-client network environments. In an example, the machine 400 may act as a peer machine in peer-to-peer (P2P) (or other distributed) network environment. The machine 400 may be a personal computer (PC), a tablet PC, a set-top box (STB), a personal digital assistant (PDA), a mobile telephone, a web appliance, a network router, switch or bridge, an Access Point (AP), a Station (STA), or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations.

Examples, as described herein, may include, or may operate on, logic or a number of components, modules, or mechanisms. Modules are tangible entities (e.g., hardware) capable of performing specified operations and may be configured or arranged in a certain manner. In an example, circuits may be arranged (e.g., internally or with respect to external entities such as other circuits) in a specified manner as a module. In an example, the whole or part of one or more computer systems (e.g., a standalone, client or server computer system) or one or more hardware processors may be configured by firmware or software (e.g., instructions, an application portion, or an application) as a module that operates to perform specified operations. In an example, the software may reside on a machine-readable medium. In an example, the software, when executed by the underlying hardware of the module, causes the hardware to perform the specified operations.

Accordingly, the term "module" is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which modules are temporarily configured, each of the modules need not be instantiated at any one moment in time. For example, where the modules comprise a general-purpose hardware processor configured using software, the general-purpose hardware processor may be configured as respective different modules at different times. Software may accordingly configure a hardware processor, for example, to constitute a particular module at one instance of time and to constitute a different module at a different instance of time.

Machine (e.g., computer system) 400 may include a hardware processor 402 (e.g., a central processing unit (CPU), a graphics processing unit (GPU), a hardware processor core, or any combination thereof), a main memory 404 and a static memory 406, some or all of which may communicate with each other via an interlink (e.g., bus) 408.

When the machine 400 operates as a STA 110, 115 (FIG. 1), the processor 402 may detect DSRC transmission/s on a wireless communication channel in a frequency spectrum comprising 5 GHz. In some examples, as describe earlier, the pertinent wireless communication channel may include frequencies in the range of 5850-5925 MHz (i.e., the "ITS band" as described earlier herein). The processor 402 may separate a signal, received on the wireless communication channel in the frequency spectrum comprising 5850-5925 MHz, into subchannels. The processor 402 may then decode at least a Signal field of at least one of the subchannels to detect whether a transmission is a DSRC transmission. As described earlier herein, the processor 402 may suppress transmission on at least one or more portions of a channel or subchannel upon detecting DSRC transmission on the wideband communication channel. For example, the processor 402 may suppress transmission by waiting a time duration for silence on a channel or subchannel.

When the machine 400 operates as an AP 105 (FIG. 1), the processor 402 may perform a coexistence technique upon receiving the AP 105 receiving a report reporting the existence of DSRC transmissions on a channel or subchannel. As described earlier herein, the coexistence technique may include buffering traffic for STA 110, 115 until the AP 105 receives another message reporting that the DSRC transmission on the channel or subchannel has terminated, or the coexistence technique may include transmitting a Channel Switch Announcement frame in accordance with a standard of the IEEE family of standards.

The machine 400 may further include a display unit 410, an alphanumeric input device 412 (e.g., a keyboard), and a user interface (UI) navigation device 414 (e.g., a mouse). In an example, the display unit 410, input device 412 and UI navigation device 414 may be a touch screen display. The machine 400 may additionally include a storage device (e.g., drive unit) 416, a signal generation device 418 (e.g., a speaker), a network interface device 420, and one or more sensors 421, such as a global positioning system (GPS) sensor, compass, accelerometer, or other sensor. The machine 400 may include an output controller 428, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

The storage device 416 may include a machine readable medium 422 on which is stored one or more sets of data structures or instructions 424 (e.g., software) embodying or utilized by any one or more of the techniques or functions described herein. The instructions 424 may also reside, completely or at least partially, within the main memory 404, within static memory 406, or within the hardware processor 402 during execution thereof by the machine 400. In an example, one or any combination of the hardware processor 402, the main memory 404, the static memory 406, or the storage device 416 may constitute machine readable media.

While the machine readable medium 422 is illustrated as a single medium, the term "machine readable medium" may include a single medium or multiple media (e.g., a centralized or distributed database, and/or associated caches and servers) configured to store the one or more instructions 424.

The term "machine readable medium" may include any medium that is capable of storing, encoding, or carrying instructions for execution by the machine 400 and that cause the machine 400 to perform any one or more of the techniques of the present disclosure, or that is capable of storing, encoding or carrying data structures used by or associated with such instructions. Non-limiting machine readable medium examples may include solid-state memories, and optical and magnetic media. Specific examples of machine readable media may include: nonvolatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; Random Access Memory (RAM); and CD-ROM and DVD-ROM disks. In some examples, machine readable media may include non-transitory machine readable media. In some examples, machine readable media may include machine readable media that is not a transitory propagating signal.

The instructions 424 may further be transmitted or received over a communications network 426 using a transmission medium via the network interface device 420 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 802.11 family of standards known as Wi-Fi®, IEEE 802.16 family of standards known as WiMax®), IEEE 802.15.4 family of standards, peer-to-peer (P2P) networks, among others. In an example, the network interface device 9020 may include one or more physical jacks (e.g., Ethernet, coaxial, or phone jacks) or one or more antennas to connect to the communications network 426. In an example, the network interface device 420 may include a plurality of antennas to wirelessly communicate using at least one of single-input multiple-output (SIMO), multiple-input multiple-output (MIMO), or multiple-input single-output (MISO) techniques. The term "transmission medium" shall be taken to include any intangible medium that is capable of storing, encoding, or carrying instructions for execution by the machine 400, and includes digital or analog communications signals or other intangible medium to facilitate communication of such software.

When the machine operates as an AP 105 (FIG. 1), the network interface device 420 may receive messages reporting the existence of a DSRC transmission on a channel or subchannel. When the machine operates as a STA 110, 115 (FIG. 1), the network interface device 420 may transmit messages to report DSRC transmissions or termination of such messages.

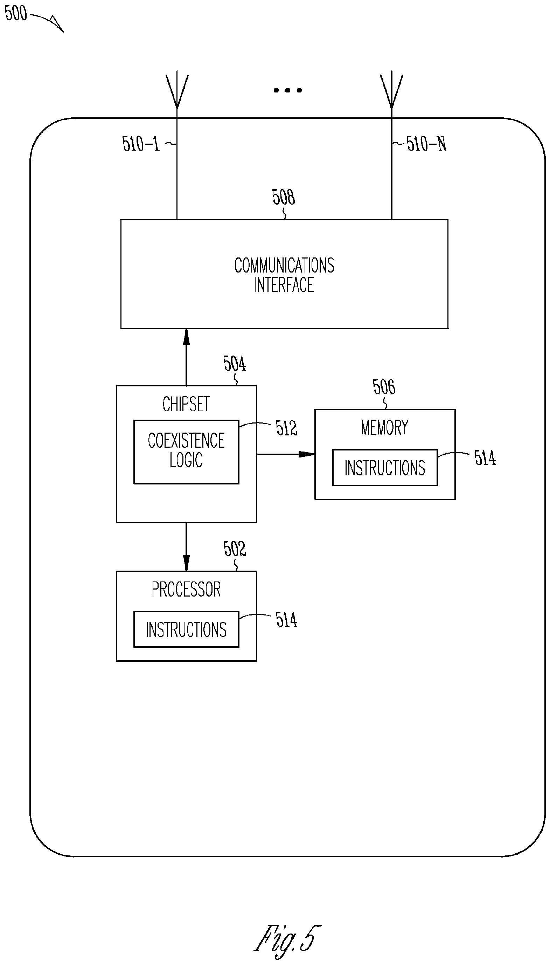

FIG. 5 illustrates a functional block diagram of a node 500, in accordance with some embodiments. Node 500 may be suitable as a STA 110, 115 (FIG. 1) or as an AP 105 (FIG. 1). Node 500 supports methods for operating in a wireless communication network, in accordance with embodiments. Node 500 may communicate in accordance with a standard of the IEEE 802.11n family of standards or with a standard of the IEEE 802.11ac family of standards or amendments or future versions thereof.

Node 500 can include a processor 502, which uses a chipset 504 to access on-chip state memory 506, as well as a communications interface 508. In one embodiment memory 506 includes, but is not limited to, random access memory (RAM), dynamic RAM (DRAM), static RAM (SRAM), synchronous DRAM (SDRAM), double data rate (DDR) SDRAM (DDR-SDRAM), or any device capable of supporting high-speed buffering of data.

In at least one embodiment, communications interface 508 is, for example, a wireless Physical Layer (PHY), which operates according to a multiple input/multiple output (MIMO) operation. The communications interface 508 may include circuitry for modulation/demodulation, upconversion/downconversion, filtering, amplification, etc. In some embodiments, two or more antennas may be coupled to the communications interface 508 for sending and receiving signals. The communications interface 508 may be configured to receive signals that were transmitted using one or more other modulation techniques such as spread spectrum modulation (e.g., direct sequence code division multiple access (DS-CDMA) and/or frequency hopping code division multiple access (FH-CDMA)), time-division multiplexing (TDM) modulation, and/or frequency-division multiplexing (FDM) modulation, although the scope of the embodiments is not limited in this respect. Communications interface 508 receives a signal at least on a wireless communication channel in the 5 GHz band. For example, communications interface 508 can receive a signal in a frequency range from about 5.85 GHz to 5.925 GHz.

Chipset 504 may incorporate therein coexistence logic 512 to, for example, suppress transmission on the wideband communication channel for at least a time duration upon detecting DSRC transmissions on the wideband communication channel. In an embodiment, chipset 506 provides MAC layer functionality.

Embodiments may be implemented in one or a combination of hardware, firmware, and software. Embodiments may also be implemented as instructions 514 stored on a non-transitory computer-readable storage device, which may be read and executed by at least one processor 502 to perform the operations described herein.

Processor 502 can detect a DSRC transmission on a wireless communication channel in a frequency spectrum comprising 5 GHz and cause to be transmitted a report message to report the DSRC transmission responsive to the detecting. If Node 500 operates as an AP 105 (FIG. 1), processor 502 can receiving a message reporting the existence of a Dedicated Short Range Communications Service (DSRC) transmission on a wireless communication channel in a frequency spectrum comprising 5 GHz and perform a coexistence technique, described herein, upon receiving the report.

In some embodiments, instructions 514 are stored on processor 502 or memory 506 such that processor 502 and memory 506 act as computer-readable media. A computer-readable storage device can include any non-transitory mechanism for storing information in a form readable by a machine (e.g., a computer). For example, a computer-readable storage device may include ROM, RAM, magnetic disk storage media, optical storage media, flash-memory devices, and other storage devices and media.

Instructions 514, when executed on Node 500, may cause Node 500 to perform any of the operations described herein. For example, instructions 514 may cause Node 500 to detect a Dedicated Short Range Communications Service (DSRC) transmission on a wireless communication channel in a frequency spectrum comprising 5 GHz and to transmit a report message to report the DSRC transmission responsive to the detecting.

Although Node 500 is illustrated as having several separate functional elements, one or more of the functional elements may be combined and may be implemented by combinations of software-configured elements, such as processing elements including digital signal processors (DSPs) and/or other hardware elements. For example, some elements may comprise one or more microprocessors, DSPs, application specific integrated circuits (ASICs), radio-frequency integrated circuits (RFICs), and combinations of various hardware and logic circuitry for performing at least the functions described herein. In some embodiments, the functional elements of Node 500 may refer to one or more processes operating on one or more processing elements.

Node 500 may include multiple transmit and receive antennas 510-1 through 510-N, where N is a natural number. Antennas 510-1 through 510-N may comprise one or more directional or omnidirectional antennas, including, for example, dipole antennas, monopole antennas, patch antennas, loop antennas, microstrip antennas, or other types of antennas suitable for transmission of RF signals. In some embodiments, instead of two or more antennas, a single antenna with multiple apertures may be used. In these embodiments, each aperture may be considered a separate antenna. In some MIMO embodiments, antennas 510-1 through 510-N may be effectively separated to take advantage of spatial diversity and the different channel characteristics that may result between each of antennas 510-1 through 510-N. In some MIMO embodiments, antennas 510-1 through 510-N may be separated by up to 1/10 of a wavelength or more. In some embodiments, antennas 510-1 through 510-N may include bandpass filters or other filtering circuitry to filter a received signal into various subchannels with different bandwidths, for example 1 MHz, 2 MHz, 5 MHz, 10 MHz, 20 MHz, or other bandwidths.

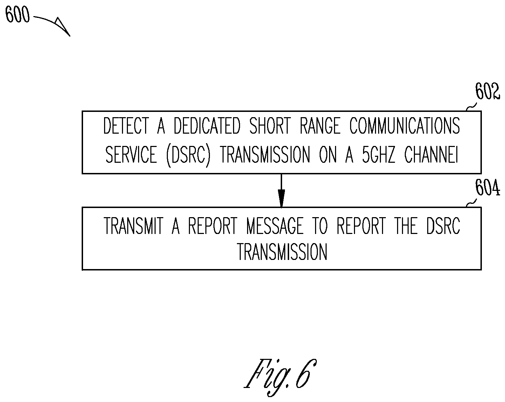

FIG. 6 illustrates a flow diagram of a method 600 to be implemented by STAs wishing to use a band, for example the 5850-5925 MHz band, in accordance with some embodiments. A STA 110, 115 (FIG. 1) can implement method 600, although other devices or networks of devices can also implement method 600.

In operation 602, the STA 110 detects a DSRC transmission on a wireless communication channel in a frequency spectrum comprising 5 GHz.

Example method 600 may continue at operation 604 with transmitting a report message to report the DSRC transmission responsive to the detecting of operation 602.

The STA 110 may separate signals into subchannels, and decode fields, for example a Signal (SIG) field, on one or more of these subchannels to detect whether a transmission is a DSRC transmission. As described earlier herein, the STA 110 may suppress transmission on at least one subchannel or on the entire channel, for a time duration. In some embodiments, the STA 110 may switch to another channel or subchannel not occupied by DSRC transmissions.

Although an embodiment has been described with reference to specific example embodiments, it will be evident that various modifications and changes may be made to these embodiments without departing from the broader scope of the invention. Accordingly, the specification and drawings are to be regarded in an illustrative rather than a restrictive sense. The accompanying drawings that form a part hereof, show by way of illustration, and not of limitation, specific embodiments in which the subject matter may be practiced. The embodiments illustrated are described in sufficient detail to enable those skilled in the art to practice the teachings disclosed herein. Other embodiments may be used and derived therefrom, such that structural and logical substitutions and changes may be made without departing from the scope of this disclosure. This Detailed Description, therefore, is not to be taken in a limiting sense, and the scope of various embodiments is defined only by the appended claims, along with the full range of equivalents to which such claims are entitled.

Such embodiments of the inventive subject matter may be referred to herein, individually and/or collectively, by the term "invention" merely for convenience and without intending to voluntarily limit the scope of this application to any single invention or inventive concept if more than one is in fact disclosed. Thus, although specific embodiments have been illustrated and described herein, it should be appreciated that any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.

In addition, in the foregoing Detailed Description, it can be seen that various features are grouped together in a single embodiment for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus, the following claims are hereby incorporated into the Detailed Description, with each claim standing on its own as a separate embodiment.

## Claims

1. A wireless communication station, STA, (110) for operating in a wireless communication network, the STA comprising processing circuitry (502) and physical layer, PHY, circuitry configured to:
detect (602) a Dedicated Short Range Communications Service, DSRC, transmission on a wireless communication channel in a frequency spectrum comprising 5 GHz, wherein the wireless communication channel includes frequencies in a range of 5850-5925 MHz; and
transmit (604) a report message to report the DSRC transmission responsive to the detecting;
wherein the processing circuitry is further configured to:
separate a signal, received on the wireless communication channel in the frequency spectrum comprising 5850-5925 MHz, into subchannels; and
decode at least a Signal field of at least one of the subchannels to detect whether a transmission is a DSRC transmission.

2. The STA of claim 1, wherein the report message includes a DSRC Measurement Report in accordance with a standard of the Institute of Electrical and Electronics Engineers, IEEE, family of standards.

3. The STA of claim 1, wherein the processing circuitry is further configured to suppress transmission on at least a subchannel of the wideband communication channel upon detecting DSRC transmission on the wideband communication channel, and wherein the processing circuitry suppresses transmission by waiting a time duration for silence on the wideband communication channel.

4. The STA of claim 1, wherein
the processing circuitry is further configured to detect that DSRC transmissions have terminated on the wireless communication channel in the frequency spectrum comprising 5 GHz; and
the PHY circuitry is further arranged to transmit a message to report that DSRC transmissions have terminated on the wireless communication channel in the frequency spectrum comprising 5 GHz.

5. A system (500) comprising:
one or more antennas (510) arranged to receive a signal on a wireless communication channel in a frequency spectrum comprising 5850-5925 MHz;
one or more processors (502) configured to
detect (602) a Dedicated Short Range Communications Service, DSRC, transmission on a wireless communication channel in the frequency spectrum; and physical layer, PHY, circuitry arranged to
transmit (604) a report message to report the DSRC transmission responsive to the detecting; and
wherein the one or more processors are further configured to:
separate a signal, received on the wireless communication channel in the frequency spectrum comprising 5850-5925 MHz, into subchannels; and
decode at least a Signal field of at least one of the subchannels to detect whether a transmission is a DSRC transmission.

6. The system of claim 5, wherein the report message includes a DSRC Measurement Report in accordance with a standard of the Institute of Electrical and Electronics Engineers, IEEE, family of standards.

7. A non-transitory computer-readable storage medium that stores instructions (514) for execution by one or more processors to perform operations to configure a wireless communication station, STA, to:
detect a Dedicated Short Range Communications Service, DSRC, transmission on a wireless communication channel in a frequency spectrum comprising 5 GHz, wherein the wireless communication channel includes frequencies in a range of 5850-5925 MHz; and
transmit a report message to report the DSRC transmission responsive to the detecting; and
wherein the instructions for execution by the one or more processors are to perform operations to further configure a wireless communication station, STA, to
separate a signal, received on the wireless communication channel in the frequency spectrum comprising 5850-5925 MHz, into subchannels;
decode at least a Signal field of at least one of the subchannels to detect whether a transmission is a DSRC transmission.

8. The non-transitory computer-readable storage medium of claim 7, wherein the report message includes a DSRC Measurement Report in accordance with a standard of the Institute of Electrical and Electronics Engineers, IEEE, family of standards.

9. The non-transitory computer-readable storage medium of claim 7, further comprising instructions to:
suppress transmission, by waiting a time duration for silence on the wideband communication channel, if a DSRC transmission is detected on the wideband communication channel.

10. A method, performed by a user station, STA, for operating in a wireless network, the method comprising:
detecting (602) a Dedicated Short Range Communications Service, DSRC, transmission on a wireless communication channel in a frequency spectrum comprising 5 GHz, wherein the wireless communication channel includes frequencies in a range of 5850-5925 MHz; and
transmitting (604) a report message to report the DSRC transmission responsive to the detecting;
the method further comprising:
separating a signal, received on the wireless communication channel in the frequency spectrum comprising 5850-5925 MHz, into subchannels; and
decoding at least a Signal field of at least one of the subchannels to detect whether a transmission is a DSRC transmission.

## Patentansprüche

1. Drahtlose Kommunikationsstation, STA, (110) zum Betrieb in einem drahtlosen Kommunikationsnetzwerk, wobei die STA eine Verarbeitungsschaltung (502) und eine Schaltung einer physikalischen Schicht, PHY, umfasst, die konfiguriert sind, um:
eine Übertragung im Bereich der Nahbereichskommunikation (DSRC) auf einem drahtlosen Kommunikationskanal in einem Frequenzspektrum von 5 GHz zu erkennen (602), wobei der drahtlose Kommunikationskanal Frequenzen in einem Bereich von 5850-5925 MHz aufweist; und
eine Protokollmeldung zu senden (604), um die DSRC-Übertragung, die auf das Erkennen anspricht, zu melden; wobei die Verarbeitungsschaltung ferner so konfiguriert ist, dass sie:
ein Signal, das auf dem drahtlosen Kommunikationskanal im Frequenzspektrum von 5850-5925 MHz empfangen wird, in Unterkanäle aufteilt; und
mindestens ein Signalfeld von mindestens einem der Unterkanäle dekodiert, um festzustellen, ob eine Übertragung eine DSRC-Übertragung ist.

2. STA nach Anspruch 1, wobei die Protokollmeldung einen DSRC-Messbericht gemäß einer Norm aus der Normenreihe des Institute of Electrical and Electronics Engineers, IEEE, aufweist.

3. STA nach Anspruch 1, wobei die Verarbeitungsschaltung ferner konfiguriert ist, um bei Erkennen einer DSRC-Übertragung auf dem Breitbandkommunikationskanal die Übertragung auf mindestens einem Unterkanal des Breitbandkommunikationskanals zu unterdrücken, und wobei die Verarbeitungsschaltung die Übertragung unterdrückt, indem sie eine Zeitdauer lang auf Stille auf dem Breitbandkommunikationskanal wartet.

4. STA nach Anspruch 1, wobei
die Verarbeitungsschaltung ferner konfiguriert ist, um zu erkennen, dass DSRC-Übertragungen auf dem drahtlosen Kommunikationskanal im Frequenzspektrum von 5 GHz beendet wurden; und
die PHY-Schaltung ferner so angeordnet ist, dass sie eine Meldung überträgt, um zu melden, dass DSRC-Übertragungen auf dem drahtlosen Kommunikationskanal im Frequenzspektrum von 5 GHz beendet wurden.

5. System (500), umfassend:
eine oder mehrere Antennen (510), die angeordnet sind, um ein Signal auf einem drahtlosen Kommunikationskanal in einem Frequenzspektrum von 5850-5925 MHz zu empfangen;
einen oder mehrere Prozessoren (502), die konfiguriert sind, um
eine Übertragung im Bereich der Nahbereichskommunikation (DSRC) auf einem drahtlosen Kommunikationskanal in dem Frequenzspektrum zu erkennen (602); und
eine Schaltung einer physikalischen Schicht, PHY, die angeordnet ist, um
eine Protokollmeldung zu übertragen (604), um die DSRC-Übertragung, die auf das Erkennen anspricht, zu melden; und
wobei ein oder mehrere Prozessoren ferner konfiguriert sind, um:
ein Signal, das auf dem drahtlosen Kommunikationskanal im Frequenzspektrum von 5850-5925 MHz empfangen wird, in Unterkanäle aufzuteilen; und
mindestens ein Signalfeld von mindestens einem der Unterkanäle zu dekodieren, um festzustellen, ob eine Übertragung eine DSRC-Übertragung ist.

6. System nach Anspruch 5, wobei die Protokollmeldung einen DSRC-Messbericht gemäß einer Norm aus der Normenreihe des Institute of Electrical and Electronics Engineers, IEEE, aufweist.

7. Nichtflüchtiges computerlesbares Speichermedium, das Anweisungen (514) zur Ausführung durch einen oder mehrere Prozessoren speichert, um Operationen zur Konfiguration einer drahtlosen Kommunikationsstation, STA, durchzuführen, um:
eine Übertragung im Bereich der Nahbereichskommunikation (DSRC) auf einem drahtlosen Kommunikationskanal in einem Frequenzspektrum von 5 GHz zu erkennen, wobei der drahtlose Kommunikationskanal Frequenzen in einem Bereich von 5850-5925 MHz aufweist; und
eine Protokollmeldung zu senden, um die DSRC-Übertragung, die auf das Erkennen anspricht, zu melden; und
wobei die Anweisungen zur Ausführung durch den einen oder die mehreren Prozessoren Operationen zur weiteren Konfiguration einer drahtlosen Kommunikationsstation, STA, durchführen sollen, um
ein Signal, das auf dem drahtlosen Kommunikationskanal im dem Frequenzspektrum von 5850-5925 MHz empfangen wird, in Unterkanäle aufzuteilen;
mindestens ein Signalfeld von mindestens einem der Unterkanäle zu dekodieren, um festzustellen, ob eine Übertragung eine DSRC-Übertragung ist.

8. Nicht-flüchtiges computerlesbares Speichermedium nach Anspruch 7, wobei die Protokollmeldung einen DSRC-Messbericht gemäß einer Norm aus der Normenreihe des Institute of Electrical and Electronics Engineers, IEEE, aufweist.

9. Nicht-flüchtiges computerlesbares Speichermedium nach Anspruch 7, ferner folgende Anweisungen umfassend:
Unterdrücken der Übertragung, indem eine Zeitdauer lang auf Stille auf dem Breitbandkommunikationskanal gewartet wird, wenn eine DSRC-Übertragung auf dem Breitbandkommunikationskanal erkannt wird.

10. Verfahren, durchgeführt von einer Benutzerstation, STA, zum Betrieb in einem drahtlosen Netzwerk, wobei das Verfahren umfasst:
Erkennen (602) einer Übertragung im Bereich der Nahbereichskommunikation (DSRC) auf einem drahtlosen Kommunikationskanal in einem Frequenzspektrum von 5 GHz, wobei der drahtlose Kommunikationskanal Frequenzen in einem Bereich von 5850-5925 MHz aufweist; und
Übertragen (604) einer Protokollmeldung, um die DSRC-Übertragung, die auf das Erkennen anspricht, zu melden;
wobei das Verfahren ferner umfasst:
Aufteilen eines Signals, das auf dem drahtlosen Kommunikationskanal im dem Frequenzspektrum von 5850-5925 MHz empfangen wird, in Unterkanäle; und
Dekodieren mindestens eines Signalfelds von mindestens einem der Unterkanäle, um festzustellen, ob eine Übertragung eine DSRC-Übertragung ist.

## Revendications

1. Station de communication sans fil, STA, (110) pour fonctionner dans un réseau de communication sans fil, la STA comprenant des circuits de traitement (502) et des circuits de couche physique, PHY, configurés pour :
détecter (602) une transmission de service de communications spécialisées à courte portée, DSRC, sur un canal de communication sans fil dans un spectre de fréquences comprenant 5 GHz, où le canal de communication sans fil inclut des fréquences dans une plage s'étendant de 5850 à 5925 MHz ; et
transmettre (604) un message de rapport pour signaler la transmission DSRC en réponse à la détection ;
où les circuits de traitement sont en outre configurés pour :
séparer en sous-canaux un signal reçu sur le canal de communication sans fil dans le spectre de fréquences comprenant la bande 5850-5925 MHz ; et
décoder au moins un champ Signal d'au moins un des sous-canaux pour détecter si une transmission est une transmission DSRC.

2. STA selon la revendication 1, dans laquelle le message de rapport inclut un rapport de mesure DSRC conformément à une norme de la famille de normes IEEE (Institute of Electrical and Electronics Engineers).

3. STA selon la revendication 1, dans laquelle les circuits de traitement sont en outre configurés pour supprimer la transmission sur au moins un sous-canal du canal de communication à large bande lors de la détection d'une transmission DSRC sur le canal de communication à large bande, et où les circuits de traitement suppriment la transmission en attendant une durée de silence sur le canal de communication à large bande.

4. STA selon la revendication 1, dans laquelle les circuits de traitement sont en outre configurés pour détecter que les transmissions DSRC se sont terminées sur le canal de communication sans fil dans le spectre de fréquences comprenant 5 GHz ; et
le circuit PHY est en outre agencé pour transmettre un message pour signaler que les transmissions DSRC se sont terminées sur le canal de communication sans fil dans le spectre de fréquences comprenant 5 GHz.

5. Système (500) comprenant :
une ou plusieurs antennes (510) agencées pour recevoir un signal sur un canal de communication sans fil dans un spectre de fréquences comprenant la bande 5850-5925 MHz ;
un ou plusieurs processeurs (502) configurés pour détecter (602) une transmission de service de communications spécialisées à courte portée, DSRC, sur un canal de communication sans fil dans le spectre de fréquences ; et
des circuits de couche physique, PHY, agencés pour :
transmettre (604) un message de rapport pour signaler la transmission DSRC en réponse à la détection ; et
où les un ou plusieurs processeurs sont en outre configurés pour :
séparer en sous-canaux un signal reçu sur le canal de communication sans fil dans le spectre de fréquences comprenant la bande 5850-5925 MHz ; et
décoder au moins un champ Signal d'au moins un des sous-canaux pour détecter si une transmission est une transmission DSRC.

6. Système selon la revendication 5, dans lequel le message de rapport inclut un rapport de mesure DSRC conformément à une norme de la famille de normes IEEE (Institute of Electrical and Electronics Engineers).

7. Support de stockage non transitoire lisible par ordinateur qui stocke des instructions (514) à exécuter par un ou plusieurs processeurs pour exécuter des opérations de configuration d'une station de communication sans fil, STA, pour :
détecter une transmission de service de communications spécialisées à courte portée, DSRC, sur un canal de communication sans fil dans un spectre de fréquences comprenant 5 GHz, où le canal de communication sans fil inclut des fréquences dans une plage s'étendant de 5850 à 5925 MHz ; et
transmettre un message de rapport pour signaler la transmission DSRC en réponse à la détection ; et
où les instructions pour l'exécution par les un ou plusieurs processeurs sont destinées à exécuter des opérations pour configurer en outre une station de communication sans fil, STA, pour
séparer en sous-canaux un signal reçu sur le canal de communication sans fil dans le spectre de fréquences comprenant la bande 5850-5925 MHz ;
décoder au moins un champ Signal d'au moins un des sous-canaux pour détecter si une transmission est une transmission DSRC.

8. Support de stockage non transitoire lisible par ordinateur selon la revendication 7, dans lequel le message de rapport inclut un rapport de mesure DSRC conformément à une norme de la famille de normes IEEE (Institute of Electrical and Electronics Engineers).

9. Support de stockage non transitoire lisible par ordinateur selon la revendication 7, comprenant en outre des instructions pour :
supprimer la transmission, en attendant une durée de silence sur le canal de communication à large bande, si une transmission DSRC est détectée sur le canal de communication à large bande.

10. Procédé, exécuté par une station utilisateur, STA, pour fonctionner dans un réseau sans fil, le procédé comprenant les étapes suivantes :
détecter (602) une transmission de service de communications spécialisées à courte portée, DSRC, sur un canal de communication sans fil dans un spectre de fréquences comprenant 5 GHz, où le canal de communication sans fil inclut des fréquences dans une plage s'étendant de 5850 à 5925 MHz ; et
transmettre (604) un message de rapport pour signaler la transmission DSRC en réponse à la détection ;
le procédé comprenant en outre les étapes suivantes :
séparer en sous-canaux un signal reçu sur le canal de communication sans fil dans le spectre de fréquences comprenant la bande 5850-5925 MHz ; et
décoder au moins un champ Signal d'au moins un des sous-canaux pour détecter si une transmission est une transmission DSRC.
